# EUROPEAN PATENT APPLICATION

(11) **EP 1 553 646 A1**
(43) Date of publication of application: **13.07.2005**
(21) Application number: 03708501.6
(22) Date of filing: 06.03.2003
(51) Int. Cl.: H01M 4/50, H01M 6/06, C25B 1/00

(54) **POSITIVE PLATE ACTIVE MATERIAL FOR CELL, METHOD FOR PRODUCING ELECTROLYTIC MANGANESE DIOXIDE, AND CELL**

(30) Priority: 11.10.2002 JP 2002299301
(71) Applicant: Mitsui Mining & Smelting Co., Ltd., Tokyo 141-8584 (JP)
(72) Inventor: YAMAGUCHI, Munetoshi, 1-5-1, Shiomachi Takehara-shi, Hiroshima (JP); OCHI, Yasuhiro, 1-5-1, Shiomachi Takehara-shi, Hiroshima (JP); NUMATA, Koichi, 1-5-1, Shiomachi Takehara-shi, Hiroshima (JP); HIRAYAMA, Shigeo, 1-5-1, Shiomachi Takehara-shi, Hiroshima (JP)
(74) Representative: Gille, Struck, Neidlein, Prop, Roos
(86) International application number: PCT/JP2003/002640
(87) International publication number: WO 2004/034490

(57) **Abstract**

A positive electrode active material for battery consisting of electrolytic manganese dioxide and a battery wherein this positive electrode active material is used, this electrolytic manganese dioxide being such that, when it is heated and the weight loss thereof is measured, the weight loss at 200°C to 400°C is not less than 2.7 wt%. The amount of weight lost in this temperature range is proportional to the quantity of bound waters inside the electrolytic manganese dioxide.

## Description

### Technical Field

The present invention relates to a positive electrode active material for battery comprising electrolytic manganese dioxide, a method for preparing electrolytic manganese dioxide, as well as to a battery using the positive electrode active material.

### Background Art

Conventionally, manganese dioxide is known as a representative substance of positive electrode active materials for battery and is used in manganese battery, alkaline manganese battery, and the like.

Methods wherein a solution of manganese sulphate and sulfuric acid is electrolyzed as an electrolytic solution are known as methods to obtain such manganese dioxide used as positive electrode active material for battery. However, as batteries cannot be obtained with sufficient characteristics when such electrolytic manganese dioxide is used for positive electrode active material of a battery, various improvements have been made.

For instance, a method has been developed whereby electrolytic manganese dioxide having higher specific surface area compared to conventional electrolytic manganese dioxide is obtained by electrolyzing an electrolytic solution in which an aqueous solution of phosphoric acid has been added to a solution of manganese sulphate and sulfuric acid (refer to Japanese Patent Application Laid-Open No. H2-57693).

In addition, attempts have been made to raise the electric potential of manganese dioxide by washing manganese dioxide with a solution of sulfuric acid.

It is considered that manganese dioxide used as positive electrode active material of a battery having a larger reaction area and a higher electric potential is better, and that having an even higher specific surface area and electric potential than conventional ones is necessary as the efficiency of batteries becomes higher. In addition, improvement of high rate performance and high rate pulse characteristics are sought in manganese battery, alkaline manganese battery, and such.

### Disclosure of the Invention

The characteristic of the positive electrode active material for battery of the present invention lies in the fact that, in a positive electrode active material for battery comprising electrolytic manganese dioxide, there is a weight loss at 200°C to 400°C of not less than 2.7 wt%, preferably not less than 3 wt%, when the electrolytic manganese dioxide is heated.

Here, as the amount of weight lost when the electrolytic manganese dioxide is heated at 200°C to 400°C is proportional to the amount of bound waters contained within the manganese dioxide, it is also possible to state that the positive electrode active material for battery of the present invention is a positive electrode active material for battery comprising electrolytic manganese dioxide containing bound waters in such quantities that, in a positive electrode active material for battery comprising electrolytic manganese dioxide containing bound waters within the manganese dioxide, the weight loss at 200°C to 400°C is not less than 2.7 wt%, preferably not less than 3 wt%, when the electrolytic manganese dioxide is heated.

Thus, the electrolytic manganese dioxide in the positive electrode active material for battery of the present invention contains internally bound waters that are tightly related to the characteristics of the battery, among which, in particular, are large amounts of internally bound waters that evaporate when the electrolytic manganese dioxide is heated in a range of 200°C to 400°C, allowing a high performance positive electrode active material for battery to be provided.

Note that the upper limit value and the lower limit value of the numerical values in the Claims have the meaning that even if a case is outside the numerical ranges specified by the present invention, it is included in the present invention, as long as it provides the same effects as when within the limits of the numerical values in question.

### Brief Description of the Drawings

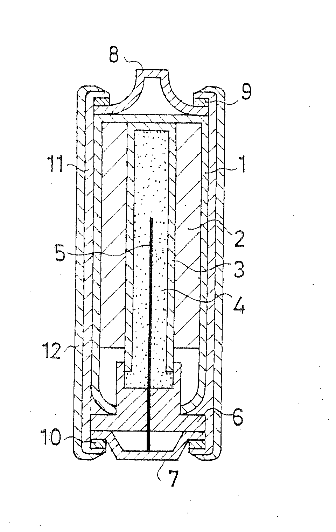

Fig. 1 is a cross section of an alkaline manganese battery pertaining to one example of the present invention.

### Detailed Description of the Preferred Embodiments

Hereinafter, the constitution of the present invention will be described in more detail.

The positive electrode active material for battery of the present invention is an electrolytic manganese dioxide prepared by an electrolytic method, containing moisture at the time of preparation by electrolysis. This moisture is contained inside the manganese dioxide as bound waters, unlike those from moisture added following the preparation of such positive electrode active material for battery. These bound waters evaporate by heating; however, the present invention was achieved by the discovery that the characteristics of the battery were related to the moisture evaporating in particular at 200°C to 400°C.

Many bound waters, meaning many internal defects in the electrolytic manganese dioxide, are presumed to contribute to an increase in the characteristics of the battery by facilitating the diffusion of hydrogen ions; in particular, the moisture evaporating at 200°C to 400°C is presumed to have an effect on the diffusion of hydrogen ions.

It is preferred that the electrolytic manganese dioxide of the present invention has a weight loss at 200°C to 400°C of not less than 2.7 wt%, and in particular, not less than 3 wt%, when the electrolytic manganese dioxide is heated; that is to say, when electrolytic manganese dioxide is subjected as a sample to a test to measure the change in weight while it is heated and the temperature is raised.

The battery characteristics of electrolytic manganese dioxide can be increased remarkably if the weight loss in the range of 200°C to 400°C is not less than 2.7 wt%, and in particular, not less than 3 wt%.

Note that since the amount of weight lost at 200°C to 400°C when the electrolytic manganese dioxide is heated is proportional to the amount of bound waters contained within manganese dioxide, the above can be rephrased as, in electrolytic manganese dioxide containing bound waters within, it is preferred that the electrolytic manganese dioxide contains bound waters in such amounts that, when the electrolytic manganese dioxide is heated, the amount of electrolytic manganese dioxide weight lost at a range of 200°C to 400°C is not less than 2.7 wt%, and in particular, not less than 3 wt%.

It is preferred that the specific surface area of the electrolytic manganese dioxide of the present invention is not more than 75 m²/g, preferably 35 m²/g to 65 m²/g, and particularly preferably 40 m²/g to 65 m²/g.

If the electrolytic manganese dioxide has a specific surface area of not more than 75 m²/g when the weight loss at 200°C to 400°C is in the above-mentioned range, it demonstrates low rate characteristics, high rate characteristics, and pulse characteristics that are preferable in practice, such that when used in a battery, a higher performance of the battery can be intended with a good balance.

Among other things, if it is 35 m²/g to 65 m²/g, that is to say not less than 35 m²/g and not more than 65 m²/g, it demonstrates excellent characteristics, particularly in the high rate pulse characteristics with large load (corresponding to pulse characteristic 2 in terms of Test 4 described below), and if it is not more than 65 m²/g, fillability is good and low rate characteristics are also good, such that an even higher performance of the battery can be further intended.

Among these, in particular, if the specific surface area is not less than 40 m²/g, when used as a positive electrode active material for battery, high rate characteristics can be further remarkably increased.

In addition, it is preferred that the electric potential of the electrolytic manganese dioxide of the present invention is 270 mV to 320 mV, and in particular, 310 mV to 320 mV.

That is to say, if electric potential is not less than 270 mV and not more than 320 mV when the weight loss at 200°C to 400°C is in the above-mentioned range, the electric potential is high enough, and when used in a battery, a higher performance of the battery can be intended.

In so doing, with electrolysis temperature, electrolysis current density, and sulfuric acid concentration at preferred conditions, electrolytic manganese dioxide with the desired moisture weight loss and specific surface area can be obtained.

For instance, it is preferred that the electrolysis temperature is 85°C to 95°C, and in particular, 90°C to 95°C. If the electrolysis temperature is not less than 85°C, good low rate characteristics can be achieved without the specific surface area becoming too large when used as a positive electrode active material for battery. Further, if not more than 95°C, high rate characteristics can be remarkably increased without the specific surface area becoming too small.

In addition, it is preferred that the electrolysis current density is 20 A/m² to 50 A/m², in particular, 20 A/m² to 35 A/m². If the electrolysis current density is not less than 20 A/m², high rate characteristics can be remarkably increased without the specific surface area becoming too small when used as a positive electrode active material for battery. Furthermore, if not more than 50 A/m², characteristics of the battery can be maintained to optimum while preventing a decrease of electric potential, without decreasing the moisture weight loss of electrolytic manganese dioxide.

In addition, it is preferred that the sulfuric acid concentration of the electrolytic solution is 50 g/l to 100 g/l, and in particular, 75 g/l to 100 g/l. If the sulfuric acid concentration is within the range of 50 g/l to 100 g/l, the characteristics of the battery can be maintained to optimum.

In regard to other electrolysis conditions, it suffices to apply a method known in the art wherein an electrolytic solution consisting of a solution of manganese sulphate and sulfuric acid is electrolyzed to obtain electrolytic manganese dioxide. For instance, the concentration of manganese in the electrolytic solution is in general 20 g/l to 50 g/l. In addition, titanium and the like for the anode, and carbon and the like for the cathode can be used as electrodes.

If the electrolytic manganese dioxide of the present invention obtained in this way has a weight loss at 200°C to 400°C of not less than 2.7 wt%, and particularly preferably not less than 3 wt%, when the electrolytic manganese dioxide is heated, a high electric potential of 270 mV to 320 mV, and furthermore, a large specific surface area of 35 m²/g to 65 m²/g, then it becomes a high performance positive electrode active material for battery.

A positive electrode active material that comprises the above-mentioned electrolytic manganese dioxide can be optimally used as positive electrode active materials of manganese battery, alkaline manganese battery, and the like.

The negative electrode active material of the battery is not limited in particular and can be one that is known in the art; using zinc and the like is preferred in the cases of manganese battery and alkaline manganese battery.

The electrolytic solution that constitutes the battery is also not limited in particular and can be one that is known in the art; the use of zinc chloride or ammonium chloride in the case of manganese battery, and potassium hydroxide and such in the case of alkaline manganese battery is preferred.

In the present invention, in cases used as a positive electrode active material for battery where the weight loss at 200°C to 400°C when the electrolytic manganese dioxide is heated is not less than 2.7 wt%, and particularly preferably not less than 3 wt%, the electric potential can be set high to 270 mV to 320 mV, and particularly preferably to 310 mV to 320 mV. In addition, if the specific surface area is set to not more than 75 m²/g, preferably to 35 m²/g to 65 m²/g, and particularly preferably to 40 m²/g to 65 m²/g, the high rate characteristics and the high rate pulse characteristics of the battery can be improved when used as a positive electrode active material of the battery.

Therefore, it is preferred that the weight loss at 200°C to 400°C when the electrolytic manganese dioxide is heated is set to not less than 2.7 wt%, and particularly preferably to not less than 3 wt%, and furthermore, that the specific surface area is set to not more than 75 m²/g, in particular to 35 m²/g to 65 m²/g, and among these in particular to 40 m²/g to 65 m²/g.

It suffices to choose the preparation conditions to obtain such electrolytic manganese dioxide suitably from the ranges mentioned above; if all are satisfied, in particular, an electrolysis temperature of 85°C to 95°C, an electrolysis current density of 20 A/m² to 50 A/m², and a sulfuric acid concentration of 50 g/l to 100 g/l, the preparation of electrolytic manganese dioxide whose weight loss at 200°C to 400°C when the electrolytic manganese dioxide is heated is not less than 2.7 wt%, and particularly preferably not less than 3 wt%, can be further ensured.

Thus, for the preparation method pertaining to the present invention, it is preferred to carry out electrolysis under the conditions of an electrolysis temperature of 85°C to 95°C, an electrolysis current density of 20 A/m² to 50 A/m², and a sulfuric acid concentration of 50 g/l to 100 g/l.

When a positive electrode active material whose weight loss at 200°C to 400°C when the electrolytic manganese dioxide is heated is not less than 2.7 wt%, and particularly preferably not less than 3 wt%, and furthermore, whose specific surface area is 35 m²/g to 65 m²/g, is used in an alkaline manganese battery, high rate pulse characteristics of the battery in particular can be increased by on the order of 10% to 20%. Such an alkaline manganese battery with excellent high rate pulse characteristics can be used optimally in, for instance, a digital camera and the like.

In the following, aspects of the present invention will be described by gathering the above points.

The first aspect of the present invention is a positive electrode active material for battery, wherein, in a positive electrode active material for battery comprising electrolytic manganese dioxide, the weight loss at 200°C to 400°C when the electrolytic manganese dioxide is heated is not less than 2.7 wt%, and preferably not less than 3 wt%.

Here, since the amount of weight lost at 200°C to 400°C when the electrolytic manganese dioxide is heated is proportional to the quantity of bound waters contained within the manganese dioxide, it can be stated that the above-mentioned first aspect is a positive electrode active material for battery comprising electrolytic manganese dioxide that contains bound waters in such quantities that the weight loss at 200°C to 400°C when the electrolytic manganese dioxide is heated is not less than 2.7 wt%, and preferably not less than 3 wt%, in a positive electrode active material for battery comprising electrolytic manganese dioxide that contains bound waters within manganese dioxide.

The present inventors newly discovered this time that the quantity by which the weight diminishes when the electrolytic manganese dioxide is heated, among which, in particular, the diminution weight by which it diminishes when heated at 200°C to 400°C, was closely related to the characteristics of the battery. Since the main portion of the weight that diminishes when the electrolytic manganese dioxide is heated is the portion of moisture (bound waters) contained within manganese dioxide that evaporates, it can be stated that the positive electrode active material for battery of the first aspect contains a large quantity of moisture that is tightly related to the characteristics of the battery; that is to say, moisture that evaporates at a heat range of 200°C to 400°C, such that it can provide high performance positive electrode active material for battery.

The second aspect of the present invention is a positive electrode active material for battery, wherein, in the first aspect, the specific surface area of the electrolytic manganese dioxide is not more than 75 m²/g.

In the second aspect, since the specific surface area of the electrolytic manganese dioxide in the first aspect is not more than 75 m²/g, it demonstrates low rate characteristics, high rate characteristics, and pulse characteristics that are preferable in practice, such that when used in a battery, a higher performance of the battery can be intended with a good balance.

The third aspect of the present invention is a positive electrode active material for battery, wherein, in the first or the second aspect, the electric potential of the electrolytic manganese dioxide is 270 mV to 320 mV.

In the third aspect, the electric potential of the electrolytic manganese dioxide that is to be the positive electrode active material for battery is high, at not less than 270 mV and not more than 320 mV, such that when used in a battery, a higher performance of the battery can be intended.

The fourth aspect of the present invention is a positive electrode active material for battery wherein, in any from the first to the third aspects, the electrolytic manganese dioxide is obtained by electrolyzing a solution of manganese sulphate and sulfuric acid as an electrolytic solution at an electrolysis temperature of 85°C to 95°C, an electrolysis current density of 20 A/m² to 50 A/m², and a sulfuric acid concentration of 50 g/l to 100 g/l.

In the fourth aspect, a high performance positive electrode active material for battery can be provided by carrying out electrolysis under conditions that satisfy all of the electrolysis temperature, electrolysis current density, and sulfuric acid concentration.

The fifth aspect of the present invention is a method for preparing electrolytic manganese dioxide, wherein, in a method for preparing an electrolytic manganese dioxide by carrying out electrolysis with a solution of manganese sulphate and sulfuric acid as an electrolytic solution, electrolysis is carried out at an electrolysis temperature of 85°C to 95°C, an electrolysis current density of 20 A/m² to 50 A/m², and a sulfuric acid concentration of 50 g/l to 100 g/l.

In the fifth aspect, by carrying out electrolysis under conditions satisfying all of the electrolysis temperature, electrolysis current density, and sulfuric acid concentration to obtain electrolytic manganese dioxide, a high performance positive electrode active material for battery can be provided.

The sixth aspect of the present invention is a method for preparing electrolytic manganese dioxide, wherein, in the fifth aspect, in the electrolytic manganese dioxide obtained, the weight loss at 200°C to 400°C when the electrolytic manganese dioxide is heated is not less than 2.7 wt%, and preferably not less than 3 wt%.

In the sixth aspect, since the weight loss at 200°C to 400°C when the electrolytic manganese dioxide is heated is not less than 2.7 wt%, and preferably not less than 3 wt%, it becomes a high performance positive electrode active material for battery.

The seventh aspect of the present invention is a method for preparing electrolytic manganese dioxide, wherein, in the fifth or the sixth aspect, specific surface area of the electrolytic manganese dioxide is not more than 75 m²/g.

In the seventh aspect, since in the fifth or the sixth aspect the specific surface area of the electrolytic manganese dioxide is not more than 75 m²/g, it demonstrates low rate characteristics, high rate characteristics, and pulse characteristics that are preferable in practice when used in a battery, a higher performance of the battery can be intended with a good balance.

The eighth aspect of the present invention is a method for preparing electrolytic manganese dioxide, wherein, in any from the fifth to the seventh aspect, the electric potential of electrolytic manganese dioxide is 270 mV to 320 mV.

In the eighth aspect, since the electric potential of electrolytic manganese dioxide is high at not less than 270 mV and not more than 320 mV when used in a battery, a higher performance of the battery can be intended.

The ninth aspect of the present invention is a battery, wherein a positive electrode active material for battery of any of the first to the fourth aspect is used.

In the ninth aspect, since positive electrode active material for battery whose weight loss at 200°C to 400°C when the electrolytic manganese dioxide is heated is not less than 2.7 wt%, and preferably not less than 3 wt%, is used, a battery having excellent high rate characteristics, high rate pulse characteristics, and the like can be provided.

### (Example 1)

An electrolytic bath comprising a 5-I beaker fitted with a heating device, titanium plates as anodes, and graphite plates as cathodes, respectively hung alternately, and a tube provided at the bottom of the electrolytic bath for introducing an electrolysis supply solution consisting of manganese sulphate was used. Electrolysis was carried out while injecting this electrolysis supply solution to the electrolytic bath to adjust the composition of the electrolytic solution during electrolysis so as to obtain 40 g/l manganese and a sulfuric acid concentration of 75 g/l, and maintaining the temperature of the electrolysis bath at 90°C at a current density of 35 A/m² for 20 days.

After the end of the electrolysis, the anode plates, where electrolytic manganese dioxide electrodeposited, were removed, and washed for 2 hours with 200 g/l of hot water at 60°C to obtain a slurry. The slurry that was obtained was neutralized using NaOH, so it became pH 6, and dried to obtain the electrolytic manganese dioxide of Example 1.

### (Example 2)

The electrolytic manganese dioxide of Example 2 was obtained in the same manner as Example 1 was carried out, except that the temperature of the electrolysis bath was lowered to 85°C.

### (Example 3)

The electrolytic manganese dioxide of Example 3 was obtained in the same manner as Example 1 was carried out, except that the temperature of the electrolysis bath was raised to 95°C.

### (Example 4)

The electrolytic manganese dioxide of Example 4 was obtained in the same manner as Example 1 was carried out, except that the current density was lowered to 20 A/m².

### (Example 5)

The electrolytic manganese dioxide of Example 5 was obtained in the same manner as Example 1 was carried out, except that the current density was raised to 50 A/m².

### (Example 6)

The electrolytic manganese dioxide of Example 6 was obtained in the same manner as Example 1 was carried out, except that the concentration of sulfuric acid in the electrolytic solution was lowered to 50 g/l.

### (Example 7)

The electrolytic manganese dioxide of Example 7 was obtained in the same manner as Example 1 was carried out, except that the concentration of sulfuric acid in the electrolytic solution was raised to 100 g/l.

### (Example 8)

The electrolytic manganese dioxide of Example 8 was obtained in the same manner as Example 1 was carried out, except that the temperature of the electrolysis bath was lowered to 80°C.

### (Example 9)

The electrolytic manganese dioxide of Example 9 was obtained in the same manner as Example 1 was carried out, except that the temperature of the electrolysis bath was raised to 98°C.

### (Example 10)

The electrolytic manganese dioxide of Example 10 was obtained in the same manner as Example 1 was carried out, except that current density was lowered to 15 A/m².

### (Example 11)

The electrolytic manganese dioxide of Example 11 was obtained in the same manner as Example 1 was carried out, except that the current density was lowered to 20 A/m², and the concentration of sulfuric acid in the electrolytic solution was lowered to 50 g/l.

### (Example 12)

The electrolytic manganese dioxide of Example 12 was obtained in the same manner as Example 1 was carried out, except that the current density was lowered to 15 A/m², and the concentration of sulfuric acid in the electrolytic solution was lowered to 50 g/l.

### (Example 13)

The electrolytic manganese dioxide of Example 13 was obtained in the same manner as Example 1 was carried out, except that the current density was lowered to 15 A/m², and the concentration of sulfuric acid in the electrolytic solution was lowered to 65 g/l.

### (Comparative Example 1)

The electrolytic manganese dioxide of Comparative Example 1 was obtained in the same manner as Example 1 was carried out, except that the current density was raised to 55 A/m².

### (Comparative Example 2)

The electrolytic manganese dioxide of Comparative Example 2 was obtained in the same manner as Example 1 was carried out, except that the concentration of sulfuric acid in the electrolytic solution was lowered to 45 g/l.

### (Comparative Example 3)

The electrolytic manganese dioxide of Comparative Example 3 was obtained in the same manner as Example 1 was carried out, except that the concentration of sulfuric acid in the electrolytic solution was raised to 105 g/l.

### [Test 1]

The weight loss at 200°C to 400°C when the electrolytic manganese dioxide obtained in Examples 1 to 13 and Comparative Examples 1 to 3 are heated, the electric potential, and the specific surface area of the electrolytic manganese dioxide were measured. The results of the measurements are shown in Table 1.

Note that the measurements of weight loss at 200°C to 400°C when the electrolytic manganese dioxide is heated (in other words the quantity of moisture in the electrolytic manganese dioxide that evaporates in this temperature range) was carried out using Thermo Gravimetry/Differential Thermal Analyser: TG-DTA (Mac-Science TG-DTA2000S) under conditions of a sample amount of 40 mg, a sample container made of alumina, a temperature increase speed of 5°C/minute (normal temperature to near 560°C), a sampling time of one second, air as the ambient gas (100 ml/minute), alumina powder as the reference substance, and a device ambient temperature of 15°C to 30°C.

Measurement of the electric potential was carried out by immersing electrolytic manganese dioxide crimped to a can consisting of nickel for 24 hours in an aqueous solution of potassium hydroxide and measuring the difference in electric potential to a mercury/mercury oxide electrode.

Measurement of the specific surface area was carried out by the BET1 point method after heating electrolytic manganese dioxide at 250°C for 20 minutes under nitrogen aeration to eliminate the moisture inside the pores.

**(Table 1)**

| | Electrolysis conditions | | | Electrolytic manganese dioxide | | |
|---|---|---|---|---|---|---|
| | Temperature (°C) | Current density (A/m²) | Sulfuric acid concentration (g/l) | Weight loss (%) | Electric potential (mV) | Specific surface (m²/g) |
| Example 1A | 90 | 35 | 75 | 3.25 | 295 | 55 |
| Example 2A | 85 | 35 | 75 | 3.35 | 280 | 65 |
| Example 3A | 95 | 35 | 75 | 3.08 | 310 | 40 |
| Example 4A | 90 | 20 | 75 | 3.12 | 320 | 40 |
| Example 5A | 90 | 50 | 75 | 3.27 | 270 | 60 |
| Example 6A | 90 | 35 | 50 | 3.15 | 270 | 55 |
| Example 7A | 90 | 35 | 100 | 3.23 | 320 | 55 |
| Example 8A | 80 | 35 | 75 | 3.14 | 270 | 75 |
| Example 9A | 98 | 35 | 75 | 3.01 | 315 | 20 |
| Example 10A | 90 | 15 | 75 | 3.05 | 320 | 35 |
| Example 11A | 90 | 20 | 50 | 2.72 | 273 | 45 |
| Example 12A | 90 | 15 | 50 | 2.86 | 278 | 45 |
| Example 13A | 90 | 15 | 65 | 2.95 | 295 | 40 |
| Comparative Example 1A | 90 | 55 | 75 | 2.68 | 265 | 65 |
| Comparative Example 2A | 90 | 35 | 45 | 2.59 | 265 | 55 |
| Comparative Example 3A | 90 | 35 | 105 | 2.59 | 250 | 55 |

As shown in Table 1, for the electrolytic manganese dioxide of Examples 1 to 10, the weight losses at 200°C to 400°C when the electrolytic manganese dioxide was heated are not less than 3.0 wt%, and the electric potentials are high at 270 mV to 320 mV.

In addition, for the electrolytic manganese dioxide of Examples 1 to 13, the weight losses at 200°C to 400°C when the electrolytic manganese dioxide was heated are not less than 2.7 wt%, and the electric potentials are high at 270 mV to 320 mV.

Furthermore, for the electrolytic manganese dioxide of Examples 1 to 7 and Examples 11 to 13, the specific surface areas are 40 m²/g to 65 m²/g.

In addition, from the results of Examples 1 to 7 and Example 11, it was found that, if preparation is carried out under the electrolysis conditions of 85°C to 95°C for the electrolysis temperature, 20 A/m² to 50 A/m² for the current density, and 50 g/l to 100 g/l for the sulfuric acid concentration, electrolytic manganese dioxide with a weight loss at 200°C to 400°C when the electrolytic manganese dioxide is heated of not less than 2.7 wt%, an electric potential of 270 mV to 320 mV, and a specific surface area of 40 m²/g to 65 m²/g is obtained.

### (Examples 1A to 13A)

LR6 (size AA) type alkaline manganese batteries were made with the electrolytic manganese dioxide of Examples 1 to 13 as positive electrode active materials. Here, an aqueous solution of potassium hydroxide at a concentration of 40% saturated with zinc oxide, to which on the order of 1.0% carbomethoxy cellulose and sodium polyacrylate were added as gelling agents, was used as the electrolytic solution of the battery. In addition, 3.0 g of zinc powder was used as negative electrode active material; this negative electrode active material and 1.5 g of the above-mentioned electrolytic solution were mixed and gelled and directly used as a negative electrode material. A longitudinal cross-sectional view of an alkaline manganese battery made in this way is shown in Fig. 1.

As shown in Fig. 1, the alkaline manganese battery as an example of the present invention is provided with a positive electrode active material 2 consisting of electrolytic manganese dioxide positioned inside a positive electrode can 1, and a negative electrode material 4 consisting of gelled zinc powder positioned on the inside of the positive electrode active material 2 via a separator 3. A negative electrode collector 5 is inserted inside the negative electrode material 4; this negative electrode collector 5 passes through a seal 6 that plugs the lower portion of the positive electrode can 1 and is joined to a negative electrode bottom plate 7 provided below the seal 6. On the other hand, a cap 8 that is to be the positive terminal is provided on the top side of the positive electrode can 1. Insulation rings 9 and 10 that vertically sandwich the cap 8 and the negative electrode bottom plate 7 are provided; a heat shrink resin tube 11 and an external cover can 12 that covers the tube 11 are provided to cover the circumference of the positive electrode can 1 while stabilizing the cap 8 and the negative electrode bottom plate 7 via these insulation rings 9 and 10.

### (Comparative Examples 1A to 3A)

Alkaline manganese batteries were made in the same manner as Examples 1A to 13A with the electrolytic manganese dioxide of Comparative Examples 1 to 3 as the positive electrode active material.

### [Test 2]

With the alkaline manganese batteries of Examples 1A to 13A and Comparative Examples 1A to 3A, discharging was carried out at 20°C and a discharge current of 100 mA (low rate), and the discharge time (unit: hour) until the cut voltage (stop voltage) of 0.9 V was measured.

The low rate characteristics were evaluated with the values of Example 9A (unit: hour) as 100%.

### [Test 3]

With the alkaline manganese batteries of Examples 1A to 13A and Comparative Examples 1A to 3A, discharging was carried out at 20°C and a discharge current of 1000 mA (high rate), and the discharge time (unit: min) until the cut voltage (stop voltage) of 0.9 V was measured.

The high rate characteristics were evaluated with the values of Example 9A (unit: min) as 100%.

### [Test 4]

With the alkaline manganese batteries of Examples 1A to 13A and Comparative Examples 1A to 3A, 10 seconds ON, 50 seconds OFF pulse-repeated discharging was performed at 20°C and a discharge current of 1000 mA (high rate), and the number of pulses until the cut voltage (stop voltage) of 0.9 V was measured (pulse characteristic 1).

In addition, with the alkaline manganese batteries of Examples 1A to 13A and Comparative Examples 1A to 3A, 10 seconds ON, 50 seconds OFF pulse-repeated discharging was performed at 20°C and a discharge current of 1500 mA (high rate), and the number of pulses until the cut voltage (stop voltage) of 0.9V was measured (pulse characteristic 2).

The high rate pulse characteristics were evaluated with the values of Example 9A as 100%.

The results of measurements of Tests 2 to 4 are shown in Table 2. Note that the quantity of weight lost at 200°C to 400°C when the electrolytic manganese dioxide is heated and the specific surface area described in Table 1 are also shown together.

**(Table 2)**

| | Characteristics of alkaline manganese battery | | | | | |
|---|---|---|---|---|---|---|
| | Physical characteristics of electrolytic manganese dioxide | | Low rate Characteristic (%) | High rate Characteristic (%) | Pulse Characteristic 1 (%) | Pulse Characteristic 2 (%) |
| | Weight loss (%) | Specific surface area (m²/g) | | | | |
| Example 1A | 3.25 | 55 | 103 | 110 | 115 | 121 |
| Example 2A | 3.35 | 65 | 101 | 105 | 120 | 119 |
| Example 3A | 3.08 | 40 | 105 | 110 | 110 | 110 |
| Example 4A | 3.12 | 40 | 107 | 115 | 110 | 112 |
| Example 5A | 3.27 | 60 | 100 | 103 | 118 | 117 |
| Example 6A | 3.15 | 55 | 100 | 103 | 115 | 113 |
| Example 7A | 3.23 | 55 | 107 | 115 | 115 | 112 |
| Example 8A | 3.14 | 75 | 80 | 90 | 105 | 108 |
| Example 9A | 3.01 | 20 | 100 | 100 | 100 | 105 |
| Example 10A | 3.05 | 35 | 100 | 95 | 100 | 113 |
| Example 11A | 2.72 | 50 | 101 | 98 | 98 | 105 |
| Example 12A | 2.86 | 50 | 98 | 95 | 103 | 108 |
| Example 13A | 2.95 | 65 | 100 | 105 | 101 | 107 |
| Comparative Example 1A | 2.68 | 65 | 90 | 90 | 100 | 100 |
| Comparative Example 2A | 2.59 | 55 | 85 | 85 | 100 | 98 |
| Comparative Example 3A | 2.59 | 55 | 80 | 75 | 90 | 100 |

### (Discussion)

As shown in Table 2, Examples 1A to 10A, which had the electrolytic manganese dioxide whose weight loss at 200°C to 400°C when the electrolytic manganese dioxide was heated is not less than 3 wt% as the positive electrode active material, in general showed satisfactory high rate characteristics and high rate pulse characteristics compared to Comparative Examples 1A to 3A.

In addition, the above-mentioned Examples 11A to 13A, which had electrolytic manganese dioxide whose weight loss at 200°C to 400°C is not less than 2.7 wt% as the positive electrode active material, in general also showed satisfactory high rate characteristics and high rate pulse characteristics compared to Comparative Examples 1A to 3A.

In particular, the high rate pulse characteristic (pulse characteristic 2) at high current was particularly satisfactory for Examples 1A to 7A and 10A, where the specific surface area of the electrolytic manganese dioxide is 35 m²/g to 65 m²/g.

Among these, Examples 1A to 7A in particular, where the weight loss at 200°C to 400°C when the electrolytic manganese dioxide was heated is not less than 3 wt% and the specific surface area of the electrolytic manganese dioxide is 40 m²/g to 65 m²/g, showed excellent high rate characteristics and high rate pulse characteristics, and were also satisfactory even when compared to Examples 8A to 13A, which are outside the above-mentioned limits.

As shown in Table 1 and Table 2, in Examples 1A to 3A where electrolysis was carried out at an electrolysis temperature of 85°C to 95°C, the high rate characteristics of the alkaline manganese batteries increased by 5% to 10%, and the high rate pulse characteristics by 10% to 20%, when compared to Example 9A, where electrolysis was carried out at 98°C. Note that in Example 8A, where electrolysis was carried out at 80°C, the low rate characteristics remarkably decreased when compared to Examples 1A to 3A and Example 9A.

In addition, in Examples 1A, 4A, and 5A, where electrolysis was carried out at a current density of 20 A/m² to 50 A/m², the high rate pulse characteristics increased by 10% to 18% compared to Example 10A, where electrolysis was carried out at 15 A/m². Note that Comparative Example 1A, where electrolysis was carried out at 55 A/m², was below par for all the battery characteristics compared to Examples 1A, 4A, 5A, and 10A.

In addition, in Examples 1A, 6A, and 7A, where electrolysis was carried out with a sulfuric acid concentration of 50 g/l to 100 g/l, the high rate pulse characteristics increased by 15% compared to Comparative Example 2A, where electrolysis was carried out at 45 g/l. Note that in Comparative Example 3A, where electrolysis was carried out at 105 g/l, all the battery characteristics were poor compared to Examples 1A, 6A, and 7A, and Comparative Example 2A.

Therefore, it was discovered that when electrolytic manganese dioxide, prepared and obtained under the electrolysis conditions of 85°C to 95°C for the electrolysis temperature, 20 A/m² to 50 A/m² for the current density, and 50 g/l to 100 g/l for the sulfuric acid concentration, as in Examples 1A to 7A, that is to say, when electrolytic manganese dioxide, wherein the weight loss at 200°C to 400°C when the electrolytic manganese dioxide is heated is not less than 2.7 wt%, preferably not less than 3.0 wt%, the electric potential is 270 mV to 320 mV, and the specific surface area is 35 m²/g to 65 m²/g, preferably 40 m²/g to 65 m²/g, is used as positive electrode active material, an alkaline manganese battery in particular with excellent high rate characteristics and high rate pulse characteristics is obtained.

## Claims

1. A positive electrode active material for battery, wherein,
in a positive electrode active material for battery comprising of electrolytic manganese dioxide,
said electrolytic manganese dioxide has a weight loss at 200°C to 400°C when said electrolytic manganese dioxide is heated of not less than 2.7 wt%.

2. The positive electrode active material for battery as recited in Claim 1, wherein the specific surface area of said electrolytic manganese dioxide is not more than 75 m²/g.

3. The positive electrode active material for battery as recited in Claim 1 or 2, wherein the electric potential of said electrolytic manganese dioxide is 270 mV to 320 mV.

4. The positive electrode active material for battery as recited in any of Claim 1 to 3, wherein said electrolytic manganese dioxide is obtained by electrolysis with a solution of manganese sulphate and sulfuric acid as the electrolytic solution, at an electrolysis temperature of 85°C to 95°C, an electrolysis current density of 20 A/m² to 50 A/m², and a sulfuric acid concentration of 50 g/l to 100 g/l.

5. A method for preparing electrolytic manganese dioxide, wherein, in a method wherein electrolysis is carried out with a solution of manganese sulphate and sulfuric acid as the electrolytic solution to prepare electrolytic manganese dioxide,
electrolysis is carried out at an electrolysis temperature of 85°C to 95°C, an electrolysis current density of 20 A/m² to 50 A/m², and a sulfuric acid concentration of 50 g/l to 100 g/l.

6. The method for preparing electrolytic manganese dioxide as recited in Claim 5, wherein the obtained electrolytic manganese dioxide has a weight loss at 200°C to 400°C when said electrolytic manganese dioxide is heated of not less than 2.7 wt%.

7. The method for preparing electrolytic manganese dioxide as recited in Claim 5 or 6, wherein the specific surface area of the obtained electrolytic manganese dioxide is not more than 75 m²/g.

8. The method for preparing electrolytic manganese dioxide as recited in any of Claims 5 to 7, wherein the electric potential of the obtained electrolytic manganese dioxide is 270 mV to 320 mV.

9. A battery, wherein the positive electrode active material for battery as recited in any of Claims 1 to 4 is used.
